# EUROPÄISCHE PATENTSCHRIFT

(11) **EP 3 443 575 B1**
(45) Veröffentlichungstag und Bekanntmachung des Hinweises auf die Patenterteilung: **24.11.2021**
(21) Anmeldenummer: 17726854.7
(22) Anmeldetag: 16.05.2017
(51) Int. Cl.: H01H 3/26, H01H 3/30

(54) **FEDERSPEICHERANTRIEB FÜR EINEN HOCHSPANNUNGS-LEISTUNGSSCHALTER UND VERFAHREN ZUM BETRIEB DES FEDERSPEICHERANTRIEBS**
SPRING-LOADED DRIVE FOR A HIGH-VOLTAGE POWER SWITCH AND METHOD FOR OPERATING THE SPRING-LOADED DRIVE
ENTRAÎNEMENT À ACCUMULATEUR À RESSORT POUR UN COMMUTATEUR DE PUISSANCE À HAUTE TENSION ET PROCÉDÉ DE FONCTIONNEMENT DE L'ENTRAÎNEMENT À ACCUMULATEUR À RESSORT

(30) Priorität: 14.06.2016 DE 102016210466
(43) Veröffentlichungstag der Anmeldung: 20.02.2019
(73) Patentinhaber: Siemens Energy Global GmbH & Co. KG, 81739 München (DE)
(72) Erfinder: HILKER, Thomas, 14532 Stahnsdorf (DE)
(86) Internationale Anmeldenummer: PCT/EP2017/061685
(87) Internationale Veröffentlichungsnummer: WO 2017/215865

(56) Entgegenhaltungen:
- EP-A1- 0 720 193
- EP-A2- 0 506 220
- FR-A1- 2 873 850
- GB-A- 2 185 631

## Beschreibung

Die Erfindung betrifft einen Federspeicherantrieb für einen Hochspannungs-Leistungsschalter sowie ein Verfahren zum Betrieb des Federspeicherantriebs, wobei der Federspeicherantrieb wenigstens eine Feder und wenigstens einen Spannmotor für die wenigstens eine Feder umfasst.

Leistungsschalter Schließen oder Öffnen Strompfade hoher elektrischer Spannungen und Ströme, insbesondere im Bereich von bis zu einigen 10·000 V und von bis zu einigen 1·000 A. Dazu wird eine große mechanische Energie benötigt. Zur Bereitstellung der benötigten mechanischen Energie werden Federspeicherantriebe verwendet. In diesen Antrieben wird eine mechanische Feder mit einem Motor über ein Getriebe gespannt, bis die Feder mechanisch verklinkt. Die Feder wird gegen selbständiges Entspannen verriegelt, so dass die Energie in der Feder gespeichert ist. Durch eine Auslöseeinrichtung kann die Verriegelung gelöst werden, wobei die Feder sich entspannt und die gespeicherte Bewegungsenergie für eine Schalthandlung des Leistungsschalters freisetzt.

Die Motorentypen, die zum Spannen von Federn verwendet werden, unterscheiden sich hinsichtlich der Bauform und der technischen Eigenschaften. Reihenschluss- bzw. Universalmotoren sind für die Verwendung an Gleich- und Wechselspannung geeignet. Somit kann ein Motor für einen bestimmten Gleichspannungswert auch für eine Wechselspannung doppelter Amplitude eingesetzt werden. In Schaltanlagen wird diese Eigenschaft beispielsweise verwendet, um ein und denselben Motor für den Netzbetrieb bei 220Vac und alternativ für den Batteriebetrieb bei 110Vdc einzusetzen.

Reihenschluss- bzw. Universalmotoren sind wegen ihrer Drehzahl-Drehmoment-Kennlinie nicht für beliebige Antriebskonfigurationen geeignet. Deshalb kommen zum Spannen von Federspeichern bzw. Federn auch Nebenschlussmotoren zum Einsatz, deren Drehzahl weniger vom Drehmoment beeinflusst wird, als bei Reihenschlussmotoren. Allerdings gehören Nebenschlussmotoren zu den Gleichstrommaschinen und bieten somit den Vorteil der zuvor beschriebenen Flexibilität hinsichtlich der Versorgungsspannungsform nicht.

Bislang werden unterschiedliche Ausführungen von Gleichstrommotoren für unterschiedliche Spannungen und Spannungsformen verwendet. Entsprechend der Nennspannung variiert die Gestaltung der Wicklungen. Außerdem werden für den Wechselspannungsbetrieb Motoren mit zusätzlichen Gleichrichtern verwendet, welche für den Gleichspannungsbetrieb nicht notwendig sind.

Als Gleichrichter können Brückengleichrichter verwendet werden, welche insbesondere in die elektrische Motorschaltung für einen Wechselspannungsbetrieb integriert sind. Ein Zweipuls-Brückengleichrichter, in Form einer Graetz-Schaltung realisiert, formt die Wechselspannung zu einer pulsierenden Gleichspannung um, indem jede negative Halbwelle der Wechselspannung in den positiven Spannungsbereich verschoben wird. Somit ergibt sich ein Gleichspannungsäquivalent, das den Motor antreibt. Es werden dabei wenigstens zwei Motorvarianten benötigt. Eine Variante für die Gleichspannungsversorgung und eine weitere für die doppelt so hohe Wechselspannungsversorgung. Würden diese Motorvarianten nicht unterschieden werden, dann würde in dem Motor, der für den Gleichspannungsbetrieb ausgelegt ist, beim Betrieb an einer doppelt so großen, gleichgerichteten Wechselspannung die vierfache Leistung umgesetzt werden. Dadurch kann der Motor beschädigt werden.

Aufgabe der vorliegenden Erfindung ist die Vermeidung bzw. Reduzierung der zuvor beschriebenen Probleme. Insbesondere ist es Aufgabe einen Federspeicherantrieb für einen Hochspannungs-Leistungsschalter und ein Verfahren zum Betrieb des Federspeicherantriebs bereitzustellen, welche die Verwendung von ein und demselben Motor, insbesondere Nebenschlussmotor zum Spannen einer Feder des Federspeicherantriebs bei gleich und bei Wechselspannung ermöglichen. Insbesondere soll der Spannmotor mit einer doppelt so großen Wechselspannung verglichen mit der Gleichspannung und mit Gleichspannung, ohne Beschädigung des Motors betrieben werden können. Verschiedene Federantriebe sollen mit einer Motorvariante bei Gleich- und Wechselspannung betrieben werden können, um Kosten zu sparen und eine einfache Konstruktion zu ermöglichen.

Das Dokument "GB 2 185 631 A" offenbart einen Federspeicherantrieb gemäß dem Oberbegriff des Patentanspruchs 1.

Die angegebene Aufgabe wird erfindungsgemäß durch einen Federspeicherantrieb für einen Hochspannungs-Leistungsschalter mit den Merkmalen gemäß Patentanspruch 1 und/oder durch ein Verfahren zum Betrieb des Federspeicherantriebs, insbesondere unter Verwendung des zuvor beschriebenen Federspeicherantriebs, gemäß Patentanspruch 8 gelöst. Vorteilhafte Ausgestaltungen des erfindungsgemäßen Federspeicherantriebs für einen Hochspannungs-Leistungsschalter und/oder des Verfahrens zum Betrieb des Federspeicherantriebs sind in den Unteransprüchen angegeben. Dabei sind Gegenstände der Hauptansprüche untereinander und mit Merkmalen von Unteransprüchen sowie Merkmale der Unteransprüche untereinander kombinierbar.

Ein erfindungsgemäßer Federspeicherantrieb für einen Hochspannungs-Leistungsschalter umfasst wenigstens eine Feder und wenigstens einen Spannmotor für die wenigstens eine Feder. Wenigstens eine Gleichrichterschaltung ist vom Federspeicherantrieb umfasst, welche durch genau eine in Reihe zum Spannmotor geschaltete Diode ausgebildet ist.

Durch die Gleichrichterschaltung mit genau einer in Reihe zum Spannmotor geschalteten Diode wird, bei an die Schaltung angelegter Wechselspannung nur eine Halbwelle der Spannung dem Spannmotor bereitgestellt. Die andere Halbwelle wird unterdrückt. Bei einer Wechselspannung von z. B. 220Vac, wird verglichen zu einer halb so großen Gleichspannung von 110Vdc, die doppelte Leistung dem Spannmotor zur Verfügung gestellt. Bei einer Verwendung eines Zweipuls-Brückengleichrichters, insbesondere mit einer Graetz-Schaltung mit vier Dioden, wird im Vergleich zur erfindungsgemäßen Schaltung mit nur einer in Reihe zum Spannmotor geschalteten Diode, eine vierfache Leistung bei Wechselspannung verglichen mit der halben Gleichspannung dem Spannmotor zur Verfügung gestellt. Dadurch kann der Spannmotor beschädigt werden. Es müssen bei Wechsel- und Gleichspannung unterschiedliche Motorvarianten verwendet werden.

Bei dem erfindungsgemäßen Federspeicherantrieb mit nur einer in Reihe zum Spannmotor geschalteten Diode wird nur eine doppelte Leistung bei Wechselspannung verglichen mit der halben Gleichspannung dem Spannmotor zur Verfügung gestellt. Dadurch wird eine Beschädigung des Spannmotors vermieden und es können bei Wechselspannung und bei Gleichspannung, insbesondere bei halber Gleichspannung verglichen mit der Wechselspannung, ein und derselbe Spannmotor, insbesondere Nebenschlussmotor verwendet werden.

Die Verringerung der notwendigen unterschiedlichen Spannmotorvarianten spart Kosten und vereinfacht die Konstruktion des Federspeicherantriebs für Hochspannungs-Leistungsschalter. Es kann für unterschiedliche Leistungsschaltervarianten und Federspeicherantriebsvarianten ein standardisierter Spannmotor verwendet werden.

Die Diode des Federspeicherantriebs kann eine Halbleiterdiode sein. Halbleiterdioden sind kostengünstig, leistungsfähig und leicht erhältlich für unterschiedliche Leistungsanforderungen.

Der Spannmotor kann ein Gehäuse umfassen, insbesondere ein metallisches Gehäuse, und die Diode kann in thermischen Kontakt mit dem Gehäuse sein, insbesondere zur Kühlung der Diode über das Gehäuse. Dadurch kann eine gute Wärmeabfuhr von der Diode an die Umwelt erreicht werden. Eine gute Kühlung, insbesondere über das große Motorgehäuse z. B. aus Metall mit guter Wärmeleitfähigkeit, kann eine Zerstörung der Diode verhindert werden. Der Federspeicherantrieb wird dadurch zuverlässiger, weniger Wartungsaufwendig, was unter anderem Kosten spart, und eine zusätzliche Kühlungseinrichtung für die Diode kann eingespart werden.

Die Diode kann im Gehäuse angeordnet sein, insbesondere direkt thermisch leitend an dem Gehäuse befestigt. Die Diode kann in der elektrischen Schaltung der Motorspannungsversorgung integriert sein. Dadurch wird eine platzsparende, kompakte Bauweise des Federspeicherantriebs ermöglicht, mit den zuvor beschriebenen Vorteilen.

Erfindungsgesäß wird die Diode von einem Brückengleichrichter umfasst, insbesondere nach Art einer Graetz-Schaltung, wobei genau eine Diode des Brückengleichrichters elektrisch in Reihe mit dem Spannmotor verbunden ist, insbesondere derart dass bei Wechselspannung eine Halbwelle der Wechselspannung über die Diode in Durchlassrichtung am Spannmotor anliegt und der Spannmotor durch die Halbwelle antreibbar ist, und wobei insbesondere drei Dioden des Brückengleichrichters jeweils in Reihe zueinander geschaltet sind, parallel zu der einen Diode in Reihe mit dem Spannmotor, und die drei Dioden derart miteinander verschaltet sind, dass kein Strom über die drei Dioden fließt.

Dadurch kann ein Standard Motor mit Brückengleichrichter verwendet werden, und durch andere Beschaltung erfindungsgemäß mit halber Verlustleistung bei doppelter Wechselspannung verglichen mit der Gleichspannung betrieben werden. Die neue Beschaltung verringert das Risiko einer Zerstörung des Motors. Dabei können bestehende Hochspannungs-Leistungsschalter durch einfache Änderung der Verschaltung umgebaut werden. Drei Dioden werden parallel zu einer in Reihe zum Motor verschalteten Diode geschaltet und blockieren den Stromfluss über den parallelen Ast mit den drei Dioden in beide Stromflussrichtungen. Ein Strom kann nur über den Schaltungsast mit einer Diode zum Motor fließen, wodurch die erfindungsgemäße Schaltung aus einer vorherigen Brückengleichrichter-Schaltung bzw. der erfindungsgemäße Federspeicherantrieb mit einfachen Mitteln realisiert wird.

Die eine Diode kann aus Teildioden gebildet sein, in Reihe und/oder parallel zueinander geschaltet, mit gleicher Durchlassrichtung. Es kann mit einer Diode oder zwei Dioden bzw. mehr Dioden, welche die Eigenschaften der einen Diode ergeben, die gleiche Wirkung erzielt werden. So können z. B. zwei hintereinander geschaltete Dioden, an welchen jeweils die halbe Spannung der einen Diode abfällt, welche die gleiche Durchlassrichtung aufweisen, die eine Diode ergeben bzw. die gleiche elektrische Wirkung wie die eine Diode ergeben. Analog können z. B. zwei parallel geschaltete Dioden, über welche jeweils der halbe Strom der einen Diode fließt, wobei beide Dioden die gleiche Durchlassrichtung zum Motor hin aufweisen, die eine Diode ergeben bzw. die gleiche elektrische Wirkung wie die eine Diode ergeben.

Der Federspeicherantrieb kann genau einen Spannmotor umfassen, insbesondere einen Spannmotor für Gleich- und Wechselspannung und/oder einen Nebenschlussmotor. Dadurch werden die zuvor beschriebenen Vorteile erreicht, insbesondere die Einsparung von Kosten.

Ein erfindungsgemäßes Verfahren zum Betreiben eines Federspeicherantriebs, insbesondere eines zuvor beschriebenen Federspeicherantriebs, weist die folgenden Schritte auf. Wenigstens eine Feder wird von wenigstens einem Spannmotor gespannt, zum Antreiben eines Hochspannungs-Leistungsschalters, wobei der wenigstens eine Spannmotor mit Spannung versorgt wird über eine Schaltung, welche genau eine Diode in Reihe zum Spannmotor mit einer Durchlassrichtung umfasst, welche bewirkt, dass bei Wechselspannung eine Halbwelle der Spannung zum Antreiben des Spannmotors am Spannmotor bereitgestellt wird und der Stromfluss über den Spannmotor im Bereich der anderen Halbwelle blockiert wird.

Genau ein Spannmotor kann zum Spannen der wenigstens einen Feder verwendet werden, welcher mit Gleich- und Wechselspannung betrieben wird, insbesondere im Fall einer doppelt so großen Wechselspannung verglichen mit der Gleichspannung, mit doppelter Leistung verglichen zur Leistung bei Gleichspannung.

Die Vorteile des erfindungsgemäßen Verfahren zum Betreiben eines Federspeicherantriebs nach Anspruch 8 sind analog den zuvor beschriebenen Vorteilen des Federspeicherantriebs für einen Hochspannungs-Leistungsschalter nach Anspruch 1 und umgekehrt.

Im Folgenden werden Ausführungsbeispiele der Erfindung schematisch in den Figuren 1 bis 7 dargestellt und nachfolgend näher beschrieben.

Dabei zeigen die
- Figur 1: schematisch in Seitenansicht einen Spannmotor 1 für eine Feder eines Federspeicherantriebs für einen Hochspannungs-Leistungsschalter, und
- Figur 2: einen Spannmotor 1 mit 4 Dioden nach dem Stand der Technik in Brückengelichrichterschaltung 7 verschaltet, und
- Figur 3: eine Gleichrichterschaltung 4 nach dem Stand der Technik für einen HochspannungsLeistungsschalter mit nur einer Diode 5, und
- Figur 4: die Spannungskurve der Gleichrichterschaltung 4 der Figur 3 bei Wechselspannung mit einer Halbwelle, und
- Figur 5: die Diode 5 außen am Gehäuse 3 des Spannmotors 1 verschaltet, und
- Figur 6: die Diode 5 innen im Gehäuse 3 des Spannmotors 1 verschaltet, und
- Figur 7: erfindungsgemäße Reihenschaltung 4 einer Diode 5 realisiert mit einem Spannmotor 1 aus dem Stand der Technik mit vorbelegter Brückengleichrichterschaltung 7.

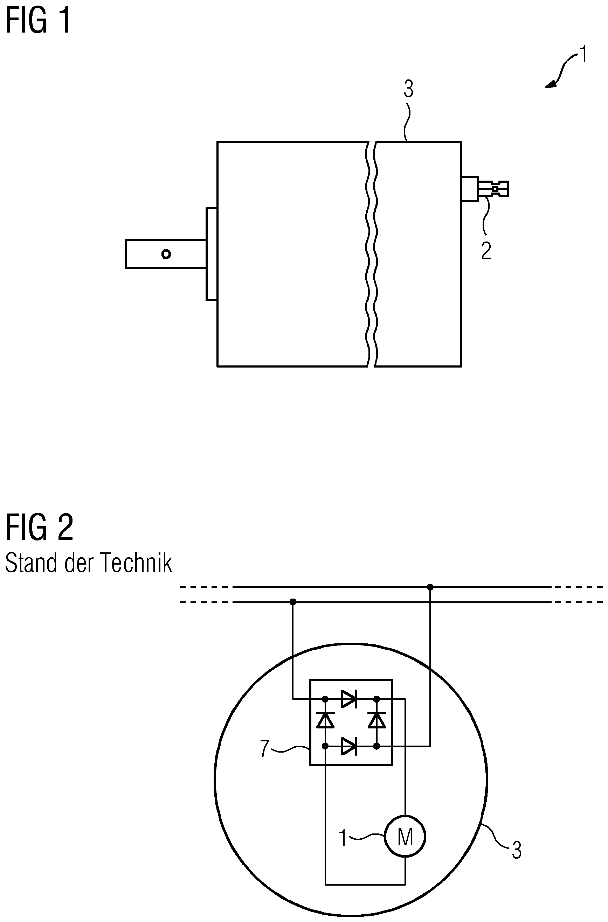

In Figur 1 ist schematisch in Seitenansicht ein Spannmotor 1 für eine Feder eines Federspeicherantriebs für einen Hochspannungs-Leistungsschalter dargestellt. Der Einfachheit halber sind in den Figuren Elemente wie die Feder des Federspeichers, Getriebe und weitere Elemente der kinematischen Kette des Hochspannungs-Leistungsschalters nicht dargestellt. Der gezeigte Spannmotor 1 umfasst ein Gehäuse 3 und elektrische Kontakte 2 für einen elektrischen Anschluss des Spannmotors 1 an eine elektrische Energieversorgung. Die Energieversorgung kann Gleich- oder Wechselspannung zur Verfügung stellen um den Spannmotor anzutreiben. Zum Beispiel können 220Vac Wechselspannung an den Kontakten 2 des Spannmotors 1 angelegt werden oder 110Vdc Gleichspannung.

In Figur 2 ist ein Spannmotor 1 nach dem Stand der Technik mit 4 Dioden in Brückengleichrichterschaltung 7 verschaltet dargestellt. Die Dioden sind derart verschaltet, dass am Motor 1 immer eine positive Spannung anliegt. Dies ist notwendig, damit der Motor 1 sich immer in gleicher Drehrichtung bewegt und die Federn spannt. Bei angelegter Gleichspannung wird die Gleichspannung durch die Brückengelichrichterschaltung 7 in ihrer Form unverändert an den Motor 1 angelegt bzw. weitergeleitet. Bei Wechselspannung wird die negative Halbwelle der Wechselspannung jeweils in den positiven Bereich geklappt bzw. umgewandelt, so dass am Motor 1 die positive und die ins positive geklappte Halbwelle der Wechselspannung anliegt.

Bei Verwendung eines Motortyps bzw. Motors 1 für Gleich- und Wechselspannung, z. B. zum Spannen der Feder mit Wechselspannung aus dem Netz von 220Vac und bei Netzausfall mit 110Vdc aus Batterien oder einer anderen Notstromversorgung, liegt an dem Motor 1 immer eine positive Spannung an, welche zu einer festen Drehrichtung zum Aufziehen/Spannen der Feder bzw. Federn führt. Bei Netzbetrieb mit 220Vac führt die Brückengelichrichterschaltung 7 zu einer hohen Restwelligkeit der Spannung bzw. des Stroms, mit einer 4-fachen Leistung am Motor 1 verglichen zu 110Vdc Gleichspannung am Motor 1 bei z. B. Notstromversorgung. Die hohe Leistung am Motor 1 kann zu Beschädigungen führen oder macht eine Auslegung des Motors 1 für hohe Leistungen notwendig, was zu hohen Kosten führt und unter Umständen es notwendig macht, bei Gleich- und Wechselspannung unterschiedliche Motoren zu verwenden.

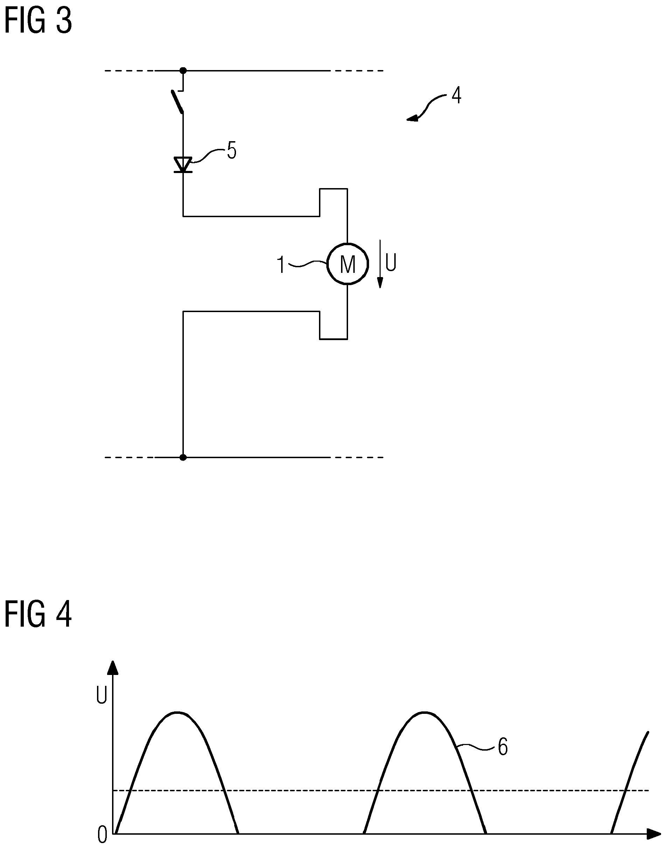

In Figur 3 ist eine Gleichrichterschaltung 4 eines Federspeicherantriebs nach dem Stand der Technik, für einen Hochspannungs-Leistungsschalter mit nur einer Diode 5 dargestellt. Die Diode 5 ist in Reihe 4 zu dem Spannmotor 1 geschaltet. Als Diode 5 kann z. B. eine Halbleiterdiode, insbesondere eine Halbleiter-Leistungsdiode verwendet werden. Die Reihenschaltung 4 der Diode 5 zum Spannmotor 1 führt zu einer Spannungskurve 6, wie sie in Figur 4 dargestellt ist. Die negative Halbwelle bei Wechselspannung wird von der Diode nicht durchgelassen und nur die positive Halbwelle der Wechselspannung liegt am Spannmotor 1 an und wird zum Spannen der Feder verwendet. Bei Gleichspannung wird die gesamte Spannung, unter der Voraussetzung der richtigen Polung der Spannung, am Motor 1 angelegt und der Strom durch die Diode 5 durchgelassen. Die gesamte Gleichspannung kann vom Motor 1 zum Spannen der Feder genutzt werden.

Die Reihenschaltung 4 der Diode 5 mit dem Spannmotor 1 führt z. B. zu einer doppelten Leistung am Motor 1 bei 220Vac Wechselspannung verglichen zu 110Vdc Gleichspannung am Motor 1 bei z. B. Notstromversorgung. Der Motor wird weniger belastet als bei 4-facher Leistung bei Brückengleichrichterschaltung 7 und die Restwelligkeit der Spannung ist geringer. Es liegt am Motor 1 immer eine positive Spannung an bei Gleich- und Wechselspannung, da bei Wechselspannung die negative Halbwelle der Spannung von der Diode 5 blockiert bzw. nicht durchgelassen wird, d. h. rausgefiltert wird. Der Motor 1 dreht sich zum Spannen der Feder bzw. Federn immer in die gleiche Richtung. Durch die geringere am Motor 1 umgesetzte Leistung bei Wechselspannung verglichen mit Brückengleichrichterschaltung 7 kann bei Gleich- und Wechselspannung ein und derselbe Motor 1 bzw. Motortyp verwendet werden, und/oder der Motor 1 kann einfacher und kostengünstiger ausgelegt werden. Insbesondere können unterschiedliche Federspeicherantriebe mit verschiedenen Anforderungen mit ein und demselben Motortyp betrieben werden, wobei die Standardisierung zu Kosteneinsparungen führt.

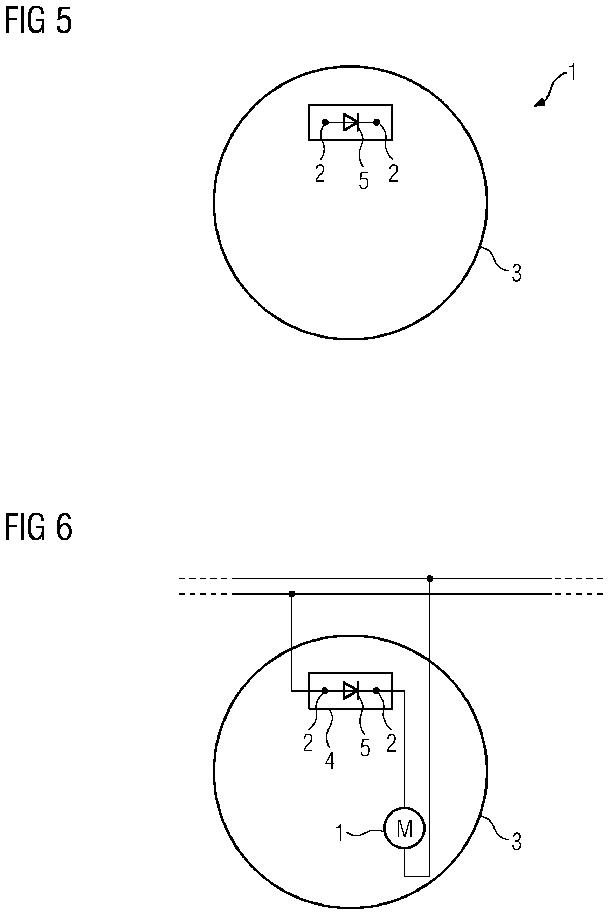

In Figur 5 ist eine mögliche Realisierung der in Figur 3 gezeigten Gleichrichterschaltung 4 mit nur einer Diode 5 dargestellt. Die Diode 5 ist zwischen zwei Kontakten 2 außen am Gehäuse 3 des Spannmotors 1 befestigt. An einem Kontakt 2 ist ein Pol der Spannungsversorgung anschließbar, an dem anderen Kontakt 2 ist der Motor 1 anschließbar bzw. angeschlossen. Der andere Pol der Spannungsversorgung ist ebenfalls mit dem Motor 1 verbunden.

In Figur 6 ist eine elektrische Verschaltung der Diode 5 mit dem Motor 1 in Reihe über Kontakte 2 am Gehäuse 3 dargestellt, wie sie analog für Figur 5 anwendbar ist. Im Unterschied zu Figur 5 ist die Diode in Figur 6 im Gehäuse 3 angeordnet. Das Gehäuse 3 kann gleichzeitig das Außengehäuse des Motors 3 darstellen und ist in Figur 6 in Schnittdarstellung zu sehen mit schematisch gezeigter Verschaltung.

Die Diode 5 kann außerhalb des Gehäuses 3, z. B. in Verbindung mit der Spannungsversorgung insbesondere auf einer Leiterplatte angeordnet sein. Die Diode 5 kann alternativ zwischen zwei Kontakten 2 des Gehäuses 3 außen oder innen im Gehäuse 3 angeordnet sein, insbesondere zusammen mit Elementen des Motors 1. Die Diode kann auch derart am Gehäuse 3 befestigt sein, dass das Gehäuse als Kühlfläche für die Diode 5 dient. Dazu kann z. B. eine Kühlfläche der Diode 5 thermisch leitend mit dem Gehäuse 3 verbunden sein, z. B. über Leitkleber oder durch metallische Verbindungen wie z. B. Schrauben, Schweißen und/oder Löten.

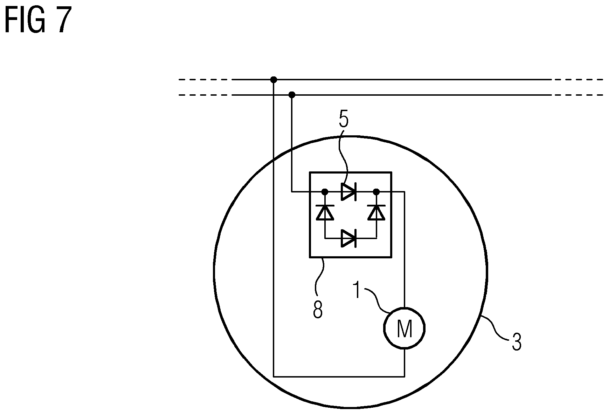

In Figur 7 ist die erfindungsgemäße Reihenschaltung 4 des Spannmotors 1 mit einer Diode 5 dargestellt, realisiert mit einem Spannmotor 1 aus dem Stand der Technik mit vorbelegter bzw. vorinstallierter Brückengleichrichterschaltung 7. Dabei ist eine Diode 5 z. B. mit der Kathode an einen Pol des Motors 1 geschaltet, wobei der andere Pol des Motors 1 mit einem Pol der Spannungsquelle verbunden ist. Der andere Pol der Spannungsquelle ist z. B. mit der Anode der einen Diode 5 elektrisch verbunden. Somit ist der Spannmotors 1 mit der einen Diode 5 in Reihenschaltung 4 verschaltet. Die drei anderen Dioden der Brückengleichrichterschaltung 7 sind in einem parallelen Ast zu der einen Diode 5 angeordnet, wobei die Anordnung der drei Dioden zueinander einen Stromfluss über den parallelen Ast verhindert.

Zwei der drei Dioden sind mit ihrer Anodenseite miteinander elektrisch verbunden, und die dritte Diode ist in Reihe zu den zwei Dioden mit der Anodenseite an die Kathodenseite einer der zwei anderen Dioden geschaltet. Dadurch ist, unabhängig von der Polung der Spannung, immer wenigstens eine der drei Dioden in dem parallelen Ast in Sperrrichtung angeordnet und ein Stromfluss über den Ast erfolgt nicht. Es wird also für die Gleichrichterschaltung des Federspeicherantriebs bzw. den Motor 1 nur eine Diode 5 der vier Dioden der Brückengleichrichterschaltung 7 verwendet. Es können somit Spannmotoren 1 mit Brückengleichrichterschaltung 7 aus dem Stand der Technik für die Gleichrichterschaltung des erfindungsgemäßen Federspeicherantriebs verwendet werden, durch Verschaltung nur einer Diode 5 in Reihe zum Motor 1 zwischen der Spannungsquelle und dem Motor 1. Bei Bedarf kann durch Änderung der Verschaltung zwischen der Brückengleichrichterschaltung 7 des Stands der Technik und der Gleichrichterschaltung des erfindungsgemäßen Federspeicherantriebs gewechselt werden und umgekehrt.

Die zuvor beschriebenen Ausführungsbeispiele können untereinander kombiniert werden und/oder können mit dem Stand der Technik kombiniert werden. So können z. B. verschiedene Arten von Dioden verwendet werden, wie z. B. Halbleiterdioden, Gleichrichterdioden und/oder Zenerdioden. Die eine Diode 5 in Reihe zum Motor 1 geschaltet, kann mit der Kathode oder mit der Anode der Diode 5 mit einem Pol des Motors 1 elektrisch verbunden sein. Dadurch kann die Drehrichtung des Motors bestimmt werden. Es können unterschiedliche Motortypen verwendet werden, insbesondere ausgelegt für Spannungsbereiche von 220 Vac und 110 Vdc. Es kann für unterschiedliche Federspeicherantriebe mit verschiedenen Anforderungen eine Gleichspannungsmotorvariante verwendet werden, insbesondere mit entsprechender elektromechanischer Auslegung für eine Gleichspannungsversorgung und eine doppelt so große Wechselspannungsversorgung. Dadurch wird auch eine Verpolungssicherheit bei der Verdrahtung des Spannmotors 1 realisiert.

### Bezugszeichenliste

- 1: Spannmotor
- 2: Kontakt
- 3: Gehäuse
- 4: Reihenschaltung
- 5: Diode
- 6: Halbwelle der Spannung
- 7: Brückengelichrichterschaltung
- 8: nur eine Diode der Brückengelichrichterschaltung beschaltet

## Patentansprüche

1. Federspeicherantrieb für einen Hochspannungs-Leistungsschalter, mit wenigstens einer Feder und mit wenigstens einem Spannmotor (1) für die wenigstens eine Feder, wobei wenigstens eine Gleichrichterschaltung (4) umfasst ist, welche durch genau eine in Reihe zum Spannmotor (1) geschaltete Diode (5) ausgebildet ist,
**dadurch gekennzeichn**e**t, dass** die Diode (5) von einem Brückengleichrichter (7) umfasst ist, nach Art einer Graetz-Schaltung, wobei genau eine Diode (5) des Brückengleichrichters elektrisch in Reihe mit dem Spannmotor (1) verbunden ist, derart dass bei Wechselspannung eine Halbwelle der Wechselspannung über die Diode (5) in Durchlassrichtung am Spannmotor (1) anliegt und der Spannmotor durch die Halbwelle antreibar ist, und wobei drei Dioden des Brückengleichrichters (7) jeweils in Reihe zueinander geschaltet sind, parallel zu der einen Diode (5) in Reihe mit dem Spannmotor, und die drei Dioden derart miteinander verschaltet sind, dass kein Strom über die drei Dioden fließt.

2. Federspeicherantrieb nach Anspruch 1,
**dadurch gekennzeichnet, dass** die Diode (5) eine Halbleiterdiode ist.

3. Federspeicherantrieb nach einem der Ansprüche 1 oder 2,
**dadurch gekennzeichnet, dass** der Spannmotor (1) ein Gehäuse (3) umfasst, und die Diode (5) in thermischen Kontakt mit dem Gehäuse (3) ist, zur Kühlung der Diode (5) über das Gehäuse (3).

4. Federspeicherantrieb nach Anspruch 3,
**dadurchgekennzeichnet**, **dass** die Diode (5) im Gehäuse (3) angeordnet ist, direkt thermisch leitend an dem Gehäuse (3) befestigt.

5. Federspeicherantrieb nach einem der vorhergehenden Ansprüche,
**dadurch gekennzeichnet, dass** die Diode (5) in der elektrischen Schaltung der Motorspannungsversorgung integriert ist.

6. Federspeicherantrieb nach einem der vorhergehenden Ansprüche,
**dadurch gekennzeichnet, dass** die eine Diode (5) aus Teildioden gebildet ist, in Reihe und/oder parallel zueinander geschaltet, mit gleicher Durchlassrichtung.

7. Federspeicherantrieb nach einem der vorhergehenden Ansprüche,
**dadurch gekennzeichnet, dass** der Federspeicherantrieb genau einen Spannmotor (1) umfasst, insbesondere einen Spannmotor (1) für Gleich- und Wechselspannung und/oder einen Nebenschlussmotor.

8. Verfahren zum Betreiben eines Federspeicherantriebs nach einem der vorhergehenden Ansprüche,
**dadurch gekennzeichnet, dass** wenigstens eine Feder von wenigstens einem Spannmotor (1) gespannt wird zum Antreiben eines Hochspannungs-Leistungsschalters, wobei der wenigstens eine Spannmotor (1) mit Spannung versorgt wird über eine Schaltung, welche genau eine Diode (5) in Reihe zum Spannmotor (1) mit einer Durchlassrichtung umfasst, welche bewirkt dass bei Wechselspannung eine Halbwelle der Spannung zum Antreiben des Spannmotors (1) am Spannmotor (1) bereitgestellt wird und der Stromfluss über den Spannmotor (1) im Bereich der anderen Halbwelle blockiert wird.

9. Verfahren nach Anspruch8,
**dadurch gekennzeichnet, dass** genau ein Spannmotor (1) zum Spannen der wenigstens einen Feder verwendet wird, welcher mit Gleich- und Wechselspannung betrieben wird.

## Claims

1. Spring-loaded drive for a high-voltage power switch, comprising at least one spring and comprising at least one tensioning motor (1) for the at least one spring, wherein at least one rectifier circuit (4) is included which is formed by precisely one diode (5) which is connected in series with the tensioning motor (1),
**characterized in that**
the diode (5) is included in a bridge rectifier (7), in the form of a Graetz circuit, wherein precisely one diode (5) of the bridge rectifier is connected electrically in series with the tensioning motor (1) in such a way that, in the case of AC voltage, a half-wave of the AC voltage is applied to the tensioning motor (1) by means of the diode (5) in the forward direction and the tensioning motor can be driven by the half-wave, and wherein three diodes of the bridge rectifier (7) are each connected in series with one another, in parallel with the one diode (5) in series with the tensioning motor, and the three diodes are interconnected in such a way that no current flows across the three diodes.

2. Spring-loaded drive according to Claim 1,
**characterized in that**
the diode (5) is a semiconductor diode.

3. Spring-loaded drive according to either of Claims 1 and 2,
**characterized in that**
the tensioning motor (1) comprises a housing (3), and the diode (5) is in thermal contact with the housing (3) for the purpose of cooling the diode (5) by means of the housing (3).

4. Spring-loaded drive according to Claim 3,
**characterized in that**
the diode (5) is arranged in the housing (3), directly thermally conductively fastened to the housing (3).

5. Spring-loaded drive according to one of the preceding claims,
**characterized in that**
the diode (5) is integrated in the electrical circuit of the motor voltage supply.

6. Spring-loaded drive according to one of the preceding claims,
**characterized in that**
the one diode (5) is formed from diode elements, connected in series and/or in parallel with one another, with the same forward direction.

7. Spring-loaded drive according to one of the preceding claims,
**characterized in that**
the spring-loaded drive comprises precisely one tensioning motor (1), in particular a tensioning motor (1) for DC voltage and AC voltage and/or a shunt-wound motor.

8. Method for operating a spring-loaded drive according to one of the preceding claims,
**characterized in that**
at least one spring is tensioned by at least one tensioning motor (1) for the purpose of driving a high-voltage power switch, wherein the at least one tensioning motor (1) is supplied with voltage by means of a circuit which comprises precisely one diode (5) in series with the tensioning motor (1) with a forward direction which has the effect that, in the case of AC voltage, a half-wave of the voltage is supplied to the tensioning motor (1) for the purpose of driving the tensioning motor (1) and the current flow across the tensioning motor (1) is blocked in the region of the other half-wave.

9. Method according to Claim 8,
**characterized in that**
precisely one tensioning motor (1) is used for the purpose of tensioning the at least one spring, which tensioning motor is operated with DC voltage and AC voltage.

## Revendications

1. Entraînement à ressort accumulateur d'un disjoncteur de haute tension comprenant au moins un ressort et au moins un moteur (1) de bandage du au moins un ressort, dans lequel il y a au moins un circuit (4) redresseur constitué par exactement une diode (5) montée en série avec le moteur (1) de bandage,
**caractérisé en ce que**
la diode (5) est comprise dans un redresseur (7) en pont, à la manière d'un circuit de Graetz, dans lequel exactement une diode (5) du redresseur en pont est monté électriquement en série avec le moteur (1) de bandage de manière à ce que, pour une tension alternative, une demi onde de la tension alternative s'applique par la diode (5) dans le sens passant au moteur (1) de bandage et de manière à ce que le moteur de bandage puisse être entraîné par la demi onde et dans lequel trois diodes du redresseur (7) en pont sont montées respectivement en série les unes avec les autres, en parallèle à la une diode (5) en série avec le moteur de bandage, et les trois diodes sont montées entre elles de manière à ce qu'un courant ne passe pas par les trois diodes.

2. Entraînement à ressort accumulateur suivant la revendication 1,
**caractérisé en ce que**
la diode (5) est une diode à semi-conducteur.

3. Entraînement à ressort accumulateur suivant l'une des revendications 1 ou 2,
**caractérisé en ce que**
le moteur (1) de bandage comprend une carcasse (3) et la diode (5) est en contact thermique avec la carcasse (3) pour le refroidissement de la diode (5) par la carcasse (3).

4. Entraînement à ressort accumulateur suivant la revendication 3,
**caractérisé en ce que**
la diode (5) est disposée dans la carcasse (3) en étant fixée en conduction thermique directe sur la carcasse (3).

5. Entraînement à ressort accumulateur suivant l'une des revendications précédentes,
**caractérisé en ce que**
la diode (5) est intégrée dans le circuit électrique de l'alimentation du moteur de bandage.

6. Entraînement à ressort accumulateur suivant l'une des revendications précédentes,
**caractérisé en ce que**
la une diode (5) est constituée de diodes partielles montées en série et en parallèle les unes par rapport aux autres de même sens de passage.

7. Entraînement à ressort accumulateur suivant l'une des revendications précédentes,
**caractérisé en ce que**
l'entraînement à ressort accumulateur comprend exactement un moteur (1) de bandage, notamment un moteur (1) de bandage pour une tension continue et une tension alternative et/ou un moteur à excitation shunt.

8. Procédé pour faire fonctionner un entraînement à ressort accumulateur suivant l'une des revendications précédentes,
**caractérisé en ce que**
on bande au moins un ressort par au moins un moteur (1) de bandage pour l'entraînement d'un disjoncteur à haute tension, dans lequel on alimente le au moins un moteur (1) de bandage en une tension par un circuit, qui comprend exactement une diode (5) en série avec le moteur (1) de bandage et ayant un sens de passage, qui fait que, lors d'une tension alternative, une demi onde de la tension est mise à disposition du moteur (1) de bandage pour l'entraînement du moteur (1) de bandage et le flux de courant est bloqué par le moteur (1) de bandage dans la partie de l'autre demi onde.

9. Procédé suivant la revendication 8,
**caractérisé en ce que**
on utilise, pour le bandage du au moins un ressort, un moteur (1) de bandage, qui fonctionne avec une tension continue et alternative.
